# EUROPEAN PATENT APPLICATION

(11) **EP 3 984 409 A1**
(43) Date of publication of application: **20.04.2022**
(21) Application number: 21201385.8
(22) Date of filing: 07.10.2021
(51) Int. Cl.: A46B 13/00, B08B 1/00, B08B 1/04, B08B 3/02, B08B 3/04, F24S 40/20, H02S 40/10

(54) **APPARATUS FOR CLEANING INCLINED SURFACES, PARTICULARLY OF SOLAR PANELS IN OPERATION**

(30) Priority: 13.10.2020 IT 202000024034
(71) Applicant: MULTIONE SRL, 36040 Grumolo delle Abbadesse (VI) (IT)
(72) Inventor: ZANINI, STEFANO, 36040 GRUMOLO DELLE ABBADESSE (VICENZA) (IT)
(74) Representative: Forattini, Amelia

(57) **Abstract**

An apparatus for cleaning inclined surfaces, particularly of solar panels in operation, including a frame (2) which supports a brushing means (10) adapted to act operatively against a surface (50) to be cleaned and at least one spraying bar (20) having a plurality of nozzles (21) adapted to spray a washing fluid toward the surface, the frame (2) being tiltable about a tilting axis (110). The spraying bar is mounted so that it can oscillate about an oscillation axis (130) which lies on a centerline plane (100) of the frame, so as to be automatically movable, upon the tilting of the frame, between a first operating position and a second operating position which are opposite with respect to the centerline plane (100).

## Description

The present invention relates to an apparatus for cleaning inclined surfaces, particularly solar panels in operation.

As is known, solar panels are devices that are able to generate electric power and/or thermal energy by utilizing the radiation emitted by the sun.

As a function of the type of energy generated, solar panels can be divided into two great categories: photovoltaic solar panels and thermal solar panels.

While the former use the energy of the sun to generate electric power, the latter, also known as solar collectors, use it to produce sanitary hot water for heating and for domestic uses.

Regardless of whether the solar panels are of one type or the other, they are installed outdoors, preferably arranged on the roofs of buildings or on the ground, so that they can collect the greatest possible amount of sunlight.

In particular, in ground-installed photovoltaic systems, parallel rows of inclined panels are installed on the ground and are arranged in a substantially mutually continuous manner, at a distance between one row and the other in order to avoid the so-called shading phenomenon.

Solar panels thus arranged, however, are of course exposed to atmospheric agents and the surfaces intended to collect solar radiation are subject to the deposition of atmospheric fine dust, particulate matter and other residues of dirt of various kinds, which limit the performance and efficiency of the system.

In order to obviate that problem, various self-propelled or non-self-propelled apparatuses are known that use washing detergents and simultaneously use means for mechanical rubbing the surfaces of the panels.

Among the known apparatuses, the ones designed to be supported by a self-propelled means, for example by application to a mechanical arm, essentially consist of a frame supporting rotating brushes, shaped as rollers or cups, that cooperate with nozzles that spray a detergent liquid or water on the surface of the panels.

In the most advanced versions, those nozzles are configured to generate selective sprays directed toward mutually opposite directions.

Such configuration allows a forward motion, that cleans the solar panels that are on one side of the self-propelled means that supports the apparatus, and a return motion that cleans the solar panels that are on the opposite side of the self-propelled means that supports the apparatus, after tilting the apparatus when changing the travel direction.

Currently known systems that operate in such a manner, however, are relatively complex and expensive, because they require the use of a double series of nozzles directed toward mutually opposite directions.

The nozzles can be associated with adapted automatic reversal valves, however, those valves are delicate and sensitive to the impurities that may be present in the washing fluid or in the water.

The aim of the present invention is to provide an apparatus for cleaning inclined surfaces, particularly solar panels in operation, that overcomes the drawbacks of the cited prior art.

Within the scope of this aim, a particular object of the invention is to provide an apparatus that is capable of reversing the dispensing direction of the nozzles in a simple and rapid manner.

A further object of the invention is to provide an apparatus that is relatively simple from the constructive and functional standpoint and is reliable and free from the drawbacks linked to the use of complicated valve systems.

A further object of the invention is to provide an apparatus that ensures very high productivity, particularly in cleaning ground-installed systems.

Not least object of the invention is to provide an apparatus that has low costs and is safe in application.

This aim and these objects, as well as others which will become better apparent hereinafter, are achieved by an apparatus for cleaning inclined surfaces, particularly of solar panels in operation, as claimed in the appended claims.

Further features and advantages will become better apparent from the description of a preferred but not exclusive embodiment of an apparatus according to the invention, illustrated by way of non-limiting example in the accompanying drawings, wherein:

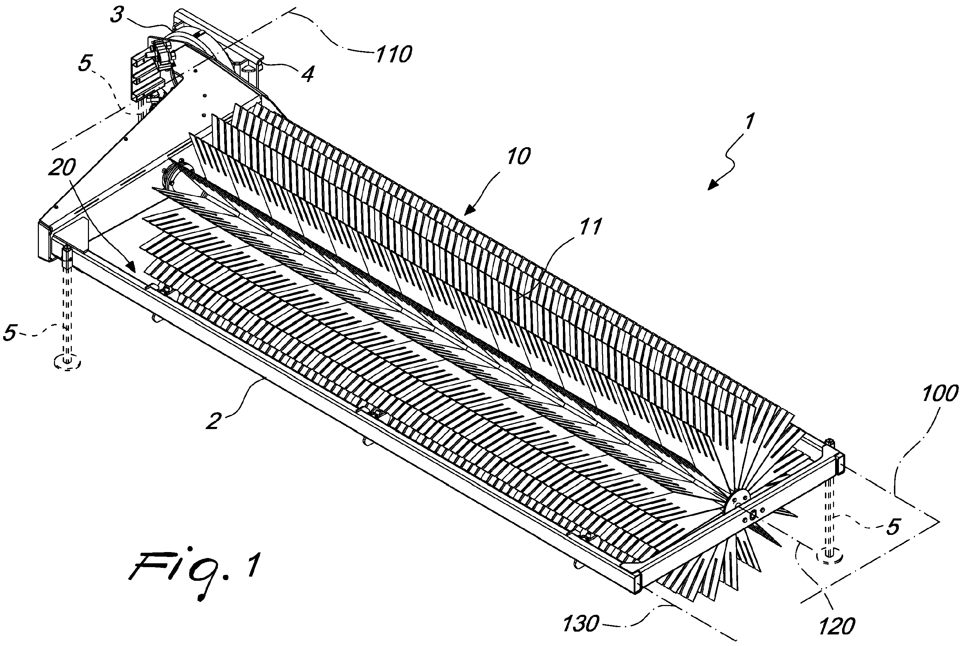

Figure 1 is a perspective view of an apparatus according to the invention;

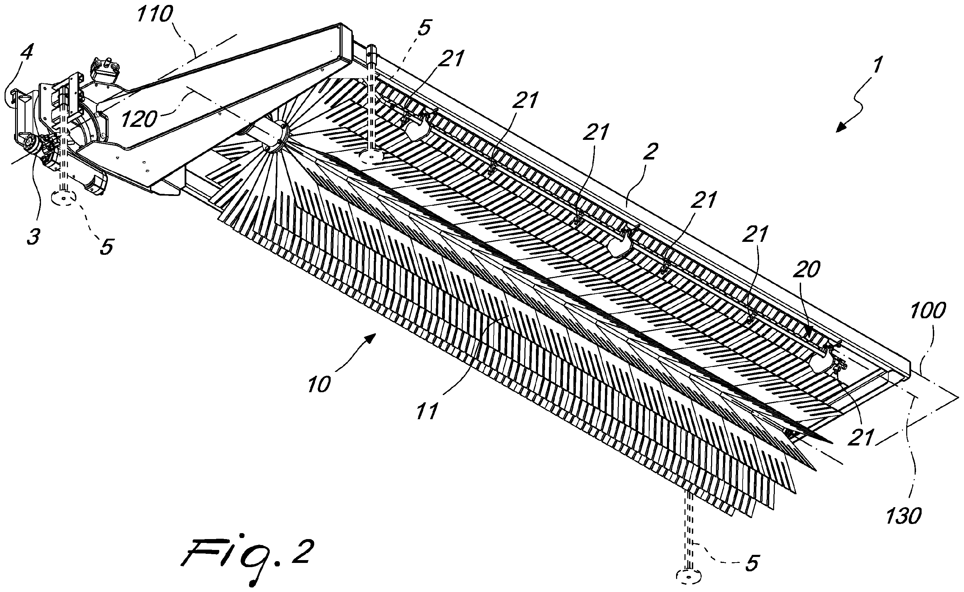

Figure 2 is another perspective view of the apparatus according to the invention;
Figure 3 is a schematic view of the tilting of the frame of the apparatus according to the invention;

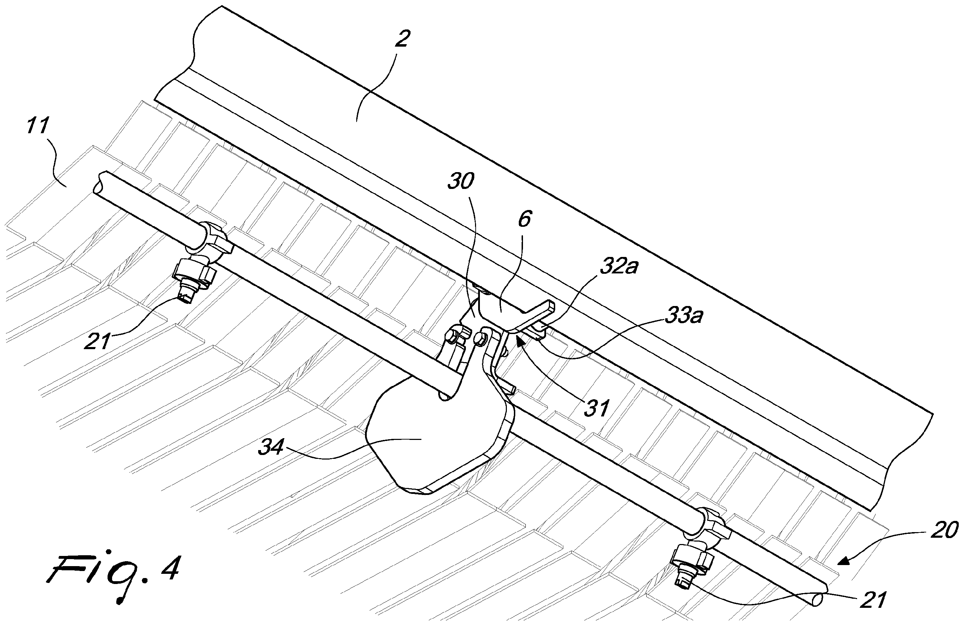

Figure 4 is an enlarged perspective view of a detail of the apparatus according to the invention;

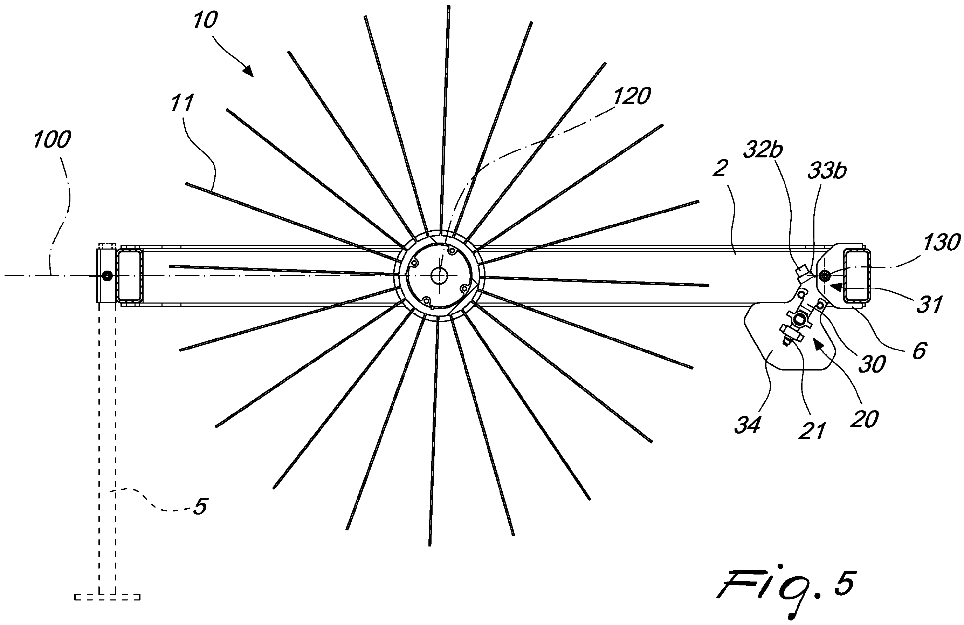

Figure 5 is a transverse sectional view of the apparatus according to the invention;

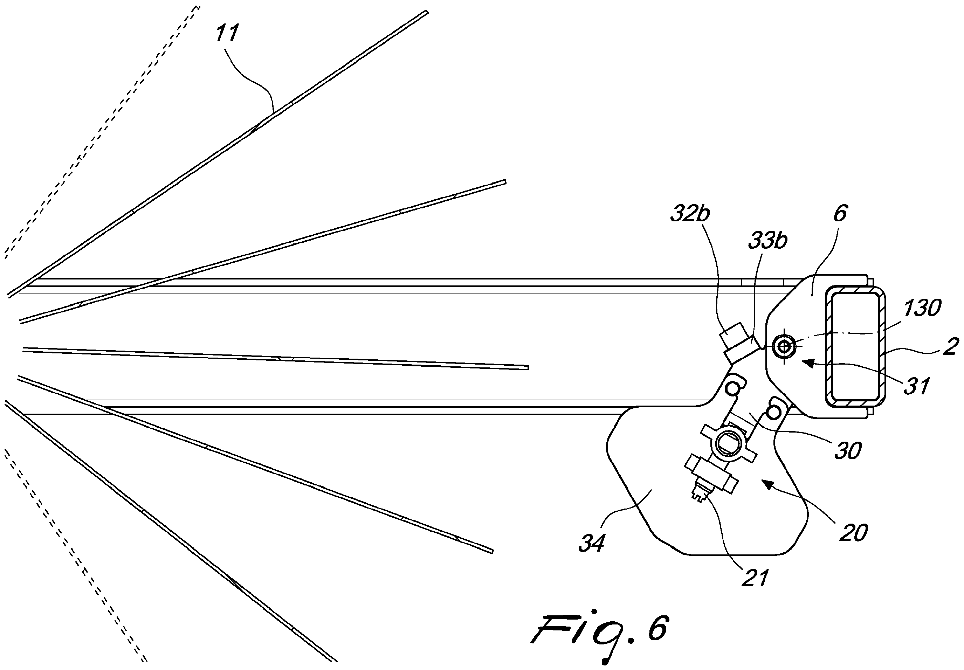

Figure 6 is an enlarged view of Figure 5.

With reference to the cited figures, the apparatus for cleaning inclined surfaces, particularly of solar panels in operation, generally designated by the reference numeral 1, has a frame 2 which supports a brush means 10 for brushing a surface 50 to be cleaned, and a spraying bar 20 which has the function of spraying a washing fluid on surface 50.

In the specific case, the surface 50 to be cleaned is related to photovoltaic or thermal solar panels 51 of a ground-installed system. However, it is evident to the person skilled in the art, that the surface 50 to be cleaned may be any other surface from which dust or other types of dirt must be removed.

Preferably, the frame 2 is constituted by a substantially rectangular metallic structure, in which it is possible to identify a centerline plane 100 which during use is substantially parallel to the surface 50 to be cleaned.

The frame 2 can be tilted about a tilting axis 110 by means of an actuation assembly 3 having a center bearing transmission.

The actuation assembly 3 is preferably arranged at a corner of the frame 2 and is configured so that it can tilt the frame 2, and therefore the entire apparatus 1, by an angle of approximately 180° or less, about the tilting axis 110.

A quick coupling means 4 for quick coupling of the frame 2 to a self-propelled means, not shown, is associated with the actuation assembly 3.

During the operations of cleaning the surface 50 the self-propelled means supports the apparatus 1, advancing along a direction that is substantially parallel to the tilting axis 110.

Advantageously, the frame 2 includes supporting brackets 5 designed to support the apparatus 1 when it is detached from the self-propelled means.

The brush means 10 is preferably configured as a roller brush 11 which has a predominantly longitudinal extension and is mounted in order to rotate on the frame 2 about a rotation axis 120 which lies on the centerline plane 100.

In the illustrated embodiment of the invention, the rotation axis 120 is substantially perpendicular to the tilting axis 110.

However, according to a further embodiment of the invention, not shown in the figures, these axes are substantially mutually parallel.

The spraying bar 20 is arranged adjacent to the roller brush 11 and includes a plurality of nozzles 21 designed to spray the washing fluid, or rinsing water, on the surface 50 to be cleaned.

The nozzles 21 are fed simultaneously or selectively by a feed means, not shown in the figures, constituted for example by a pump, a tank and by a related hydraulic circuit.

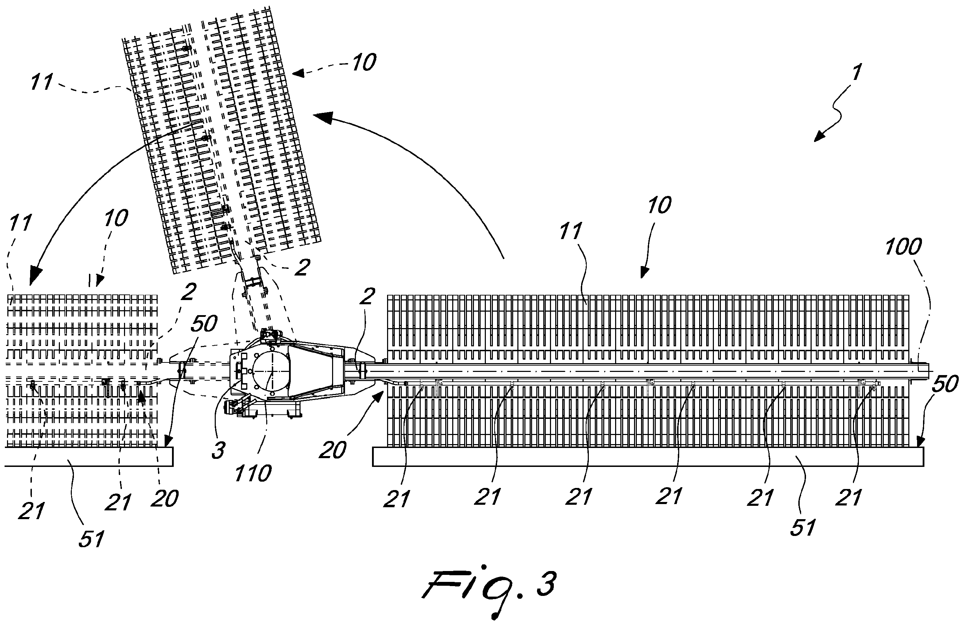

According to the present invention, the spraying bar 20 is mounted so that it can oscillate with respect to the frame 2 about an oscillation axis 130 which lies on the centerline plane 100, so that it can move automatically, upon the tilting of the frame 2, between a first working position and a second working position, that are opposite with respect to the centerline plane 100, as shown schematically in Figure 3.

In practice, according to the invention, the nozzles 21 of the spraying bar 20 are always automatically directed toward the surface 50 to be cleaned, even after tilting the frame 2, and therefore of the entire apparatus 1, through an angle of approximately 180° or less.

In the illustrated embodiment, the oscillation axis 130 of the spraying bar 20 is substantially perpendicular to the tilting axis 110 of the frame 2 and substantially parallel to the rotation axis 120 of the roller brush 11.

However, according to a further embodiment of the invention, not shown in the drawings, these axes might be mutually arranged in other manners; for example, the oscillation axis 130 of the spraying bar 20 can be substantially parallel both to the tilting axis 110 of the frame 2 and to the rotation axis 120 of the roller brush 11, or substantially parallel to the former and transverse to the latter.

Preferably, the tilting of the spraying bar 20 about the oscillation axis 130 is obtained by means of a plurality of supports 30 which are integral therewith and are hinged to the frame 2 by means of a hinge means 31, which allows the spraying bar 20 to rotate in two opposite directions due to its own weight, i.e., by gravity.

The hinge means 31 may be constituted, for example, by superimposed and non-coplanar portions of the supports 30 and of tabs 6 which protrude from the frame 2 and are mutually connected by means of a bolt. Advantageously, the apparatus 1 includes a stop means which allows to define and adjust the maximum oscillation angle of the supports 30 and therefore of the spraying bar 20 with respect to the frame 2.

In the specific case, the stop means is constituted by pairs of shock absorber buffers 32a and 32b that are removably mounted on each support 30.

Preferably, the shock absorber buffers 32a, 32b are laterally symmetrically arranged with respect to an axis of symmetry of the corresponding support 30, so as to interfere alternately by abutment against the frame 2 when the spraying bar 20 assumes respectively the first and second operating positions cited above.

In the illustrated example, the shock absorber buffers 32a, 32b are mounted on respective brackets 33a, 33b which protrude from the corresponding support 30.

Advantageously, the shock absorber buffers 32a, 32b are interchangeable with other buffers having different shapes and dimensions.

The use of shock absorber buffers 32a, 32b of different height, i.e., which protrude to a greater or smaller extent from the brackets 33a, 33b, allows to adjust the breadth of the oscillations of the supports 30 and therefore of the spraying bar 20.

The apparatus 1 also includes adjuster means 34 for adjusting the rotational inertia of the spraying bar 20.

In the specific case, the adjuster means 34 is configured as contoured masses which are removably mounted on the supports 30 and are substantially symmetrical with respect to the axis of symmetry of the corresponding support 30.

Advantageously, the masses 34 are interchangeable with other masses having different shapes, dimensions and weights, chosen also as a function of the characteristics of the spraying bar 20 that is used.

The masses 34 in fact must be heavy enough to ensure good stability of the spraying bar 20 when it assumes respectively the first and second operating position, but at the same time they must allow the spraying bar 20 to have maximum reactivity in passing from one operating position to the other.

The use of the apparatus according to the invention is apparent from what has been described above.

In particular, when the apparatus 1 is supported by a self-propelled means and the frame 2 is tilted by an angle of approximately 180° or less about the tilting axis 110, the spraying bar 20 moves automatically by gravity from the first operating position to the second operating position or vice versa, oscillating about the oscillation axis 130 in one direction or the other.

In this manner, the sprays generated by the nozzles 21 are always automatically directed toward the surface to be cleaned 50 even following the tilting of the frame 2.

The tilting of the frame 2 occurs, for example, if the apparatus 1 is used to clean ground-installed photovoltaic systems, in which the solar panels 51 are supported by inclined structures, arranged on parallel rows which are spaced so as to avoid shading.

In this case, in fact, the self-propelled means that cleans the solar panels 51 with the apparatus 1 traces a substantially zigzag trajectory, i.e., following opposite forward and return directions.

In practice, the self-propelled means travels in the forward direction along a corridor between two parallel rows, cleaning, by means of the apparatus 1, the solar panels 51 that are in a position that is adjacent to one of its sides, and travels in the return direction along a corridor which is parallel to the one that it has just followed, this time cleaning, by means of the apparatus 1, the solar panels 51 that are in a position that is adjacent to the side that is opposite the preceding one.

During the transition of the self-propelled means from one corridor to the next, the tilting of the frame 2 and the consequent automatic oscillation of the spraying bar 20 occur, the bar passing from a first operating position to a second operating position which is opposite the preceding one with respect to the centerline plane 100, so that the nozzles 21 are always automatically directed toward the surface to be cleaned 50.

In practice it has been found that the invention achieves the intended aim and objects, providing an apparatus for cleaning inclined surfaces, particularly solar panels in operation, that allows to automatically reverse the dispensing direction of the nozzles in a simple and rapid manner.

Also, the apparatus according to the invention is relatively simple from the constructive and functional standpoint and is reliable and free from the drawbacks linked to the use of complicated valve systems.

A further advantage of the apparatus according to the invention is its very high productivity, particularly in cleaning ground-installed systems.

The materials used, as well as the dimensions and shapes, may of course be any according to the requirements and the state of the art.

## Claims

1. An apparatus for cleaning inclined surfaces, particularly of solar panels in operation, comprising a frame which supports a brush means adapted to act operatively on a surface to be cleaned, and at least one spraying bar having a plurality of nozzles adapted to spray a washing fluid on said surface to be cleaned; said frame being tiltable about a tilting axis, said apparatus being **characterized in that** said spraying bar is mounted so that it can oscillate about an oscillation axis which lies on a centerline plane of said frame, so as to be automatically movable, upon the tilting of said frame, between a first operating position and a second operating position that are opposite with respect to said centerline plane.

2. The apparatus according to claim 1, **characterized in that** it comprises one or more supports that are integral with said spraying bar and are hinged to said frame by means of a hinge means, said supports being able to tilt about said oscillation axis.

3. The apparatus according to one or more of the preceding claims, **characterized in that** it comprises a stop means adapted to define and adjust the maximum oscillation angle of said supports with respect to said frame.

4. The apparatus according to one or more of the preceding claims, **characterized in that** said stop means comprises at least one pair of shock absorber buffers that are removably mounted on at least one of said supports; said shock absorber buffers being laterally symmetrically arranged on an axis of symmetry of the corresponding support, so as to interfere alternately by abutment against said frame when said spraying bar assumes respectively said first and second operating positions.

5. The apparatus according to one or more of the preceding claims, characterizing that it comprises adjuster means for adjusting the rotational inertia of said spraying bar.

6. The apparatus according to one or more of the preceding claims, **characterized in that** said adjuster means comprises at least one mass removably mounted on at least one of said supports, said mass being substantially symmetrical with respect to said axis of symmetry.

7. The apparatus according to one or more of the preceding claims, **characterized in that** it comprises a plurality of supports that are integral with said spraying bar and are hinged to said frame by means of said hinge means; a pair of said shock absorber buffers and one of said masses being removably mounted on each one of said supports.

8. The apparatus according to one or more of the preceding claims, **characterized in that** said brush means comprises at least one roller brush which is mounted so that it can rotate about a rotation axis on said frame.

9. The apparatus according to one or more of the preceding claims, **characterized in that** it comprises a quick coupling means for the quick coupling of said frame to a self-propelled means, said means being preset for tilting said frame about said tilting axis.

10. The apparatus according to one or more of the preceding claims, **characterized in that** said tilting axis of said frame is substantially parallel to the advancement direction of said self-propelled means and transverse to said oscillation axis of said spraying bar and to said rotation axis of said roller brush; said oscillation axis and said rotation axis being substantially parallel to each other.
